# EUROPÄISCHE PATENTSCHRIFT

(11) **EP 0 839 682 B1**
(45) Veröffentlichungstag und Bekanntmachung des Hinweises auf die Patenterteilung: **22.01.2003**
(21) Anmeldenummer: 97117595.5
(22) Anmeldetag: 10.10.1997
(51) Int. Cl.: B60K 37/06

(54) **Bedienvorrichtung**
Control device
Dispositif de commande

(30) Priorität: 02.11.1996 DE 19645211
(43) Veröffentlichungstag der Anmeldung: 06.05.1998
(73) Patentinhaber: GKR Gesellschaft für Fahrzeugklimaregelung mbH, D-71701 Schwieberdingen (DE)
(72) Erfinder: Breitling, Wolfram, 74343 Sachsenheim (DE)
(74) Vertreter: Behrens, Ralf-Holger

(56) Entgegenhaltungen:
- EP-A- 0 592 984
- EP-A- 0 823 347
- DE-A- 4 445 826
- US-A- 3 970 782

## Beschreibung

### Stand der Technik

Die Erfindung geht aus von einer Bedienvorrichtung nach der Gattung des Hauptanspruchs. Aus der EP-PS 0 470 402 ist bereits eine Prüfvorrichtung bekannt, in deren Gehäuse eine signalverarbeitende Anordnung untergebracht ist. Das Gehäuse enthält Abschlußteile, auf denen Bedienelemente angeordnet sind. Die Abschlußteile sind lösbar mit der signalverarbeitenden Anordnung verbunden. Die Abschlußteile des Gehäuses lassen sich austauschen, wodurch sich die Flexibilität und Übersichtlichkeit der Prüfvorrichtung erhöht. Eine automatische Anpassung der Abschlußteile an den jeweiligen Prüfmodus ist jedoch nicht vorgesehen.

Aus der DE-A 44 45 826 ist eine Einbauvorrichtung mit den Merkmalen des Oberbegriffs des 1. Anspruchs, insbesondere für ein Armaturenbrett eines Kraftfahrzeugs bekannt. Sie umfasst ein schwenkbares Gehäuse, das an einem Umfangsbereich zugängliche Einbaugeräte wie Telefon, Bedienelemente, Bordcomputer, Kassettenablage aufnimmt. Das Gehäuse ist zumindest teilweise innerhalb eines mit einer Wandöffnung versehenen Wandbereiches angeordnet. Einzelne oder mehrere Einbaugeräte bzw. Ablagefächer sind in einer zugeordneten Schwenkstellung des Gehäuses über die Wandöffnung zugänglich, wobei in dieser Schwenkstellung wenigstens ein weiteres Einbaugerät und/oder ein Ablagefach und/oder ein zur Aufnahme eines Einbaugerätes geeignetes Fach in dem Wandbereich verdeckt angeordnet ist.

Aus der nachveröffentlichten EP-A-0 823 347 ist eine Bedienvorrichtung beispielsweise für ein Kraftfahrzeug bekannt, die mehrere, auf einer drehbaren Walze angeordnete Bedienebenen aufweist. Eine feststehende Visualisierungsanzeige bringt solche, mit dem über die Bedienelemente ausgewählten Gerät korrespondierende Daten zur Anzeige wie beispielsweise die Temperatur oder den Radiokanal.

Der Erfindung liegt die Aufgabe zugrunde, eine übersichtliche und benutzerfreundliche Bedienoberfläche anzugeben. Die Aufgabe wird durch die im Hauptanspruch angegebenen Merkmale gelöst.

### Vorteile der Erfindung

Die erfindungsgemäße Bedienvorrichtung besteht aus einem um eine Achse drehbar gelagerten Teil, das mindestens zwei Bedienoberflächen aufweist. Auf den Bedienoberflächen sind Bedienelemente untergebracht. Durch Drehen des Teils ist eine Bedienoberfläche auswählbar. Da das drehbar gelagerte Teil eine Vielzahl von Bedienoberflächen integriert, entsteht eine sowohl kompakte als auch flexible Bedienvorrichtung. Aus fertigungstechnischer Hinsicht ist es günstig, alle Bedienelemente in räumlicher Nähe zueinander anzuordnen. Insbesondere unter Zuhilfenahme eines Bussystems läßt sich dadurch der Verkabelungsaufwand reduzieren. Mehrere Bedienoberflächen erlauben eine thematische Gliederung der Bedienelemente nach den gewünschten Funktionen. Dies erhöht die Übersichtlichkeit. Da die Auswahl der Bedienoberfläche durch Drehen des Teils erfolgt, wandern die nicht gewünschten Bedienoberflächen aus dem Sichtfeld. Die nicht benötigten Bedienelemente werden ausgeblendet und lenken nicht von der gewünschten Bedienung ab.

In einer erfindungsgemäßen Weiterbildung ist das Teil in einem Cockpit eines Kraftfahrzeugs untergebracht. Die erfindungsgemäße Bedienvorrichtung trägt zur Platzersparnis im Cockpit bei. Alle sonst räumlich verteilten Bedienelemente lassen sich an einem Ort zusammenfassen, ohne daß die Vielfalt verwirrt, da immer nur eine Bedienoberfläche sichtbar ist. Eine aus Platzgründen ungünstige Positionierung der Bedienelemente kann vermieden werden. Die Unterbringung der den Bedienelementen zugeordneten Steuergeräte erfolgt nach funktionalen und nicht mehr nach bedientechnischen Gesichtspunkten. Die Integration der Bedienelemente in der Bedienvorrichtung erhöht die Servicefreundlichkeit. Denn bei einer guten Zugänglichkeit des Teils sind alle Bedienelemente leicht zu erreichen und auszutauschen.

In einer vorteilhaften Weiterbildung ist vorgesehen, daß lediglich die ausgewählte Bedienoberfläche sichtbar ist. Nicht benötigte Bedienelemente werden dadurch ausgeblendet und können den Benutzer des Kraftfahrzeugs nicht verwirren. Insbesondere bei einer thematischen, funktionsgerechten Gliederung der Bedienoberflächen sind nur solche Bedienelemente sichtbar, die auch funktional im Zusammenhang mit der gewünschten Funktion stehen.

Eine Ausgestaltung zeichnet sich dadurch aus, daß nur die Bedienelemente der ausgewählten Bedienoberfläche manuell betätigbar sind. Dadurch werden nicht der gewünschten Funktion zugeordnete Bedienelemente gezielt unterdrückt. Fehlbedienungen lassen sich verringern.

In einer zweckmäßigen Weiterbildung sind die Bedienoberflächen lösbar mit dem Teil verbunden. Je nach gewünschter Ausstattung des Kraftfahrzeugs bestückt die Fertigung das Teil mit den gewünschten Bedienoberflächen. Indem bestimmte Bedienoberflächen der Grundausstattung zugerechnet werden, führt diese Standardisierung zur Reduktion der Variantenvielfalt. Kundenspezifische Bedienoberflächen passen die Grundausstattung an die Kundenwünsche an und gewährleisten ausreichende Flexibilität.

Eine vorteilhafte Ausgestaltung sieht eine Anzeige vor, die jeder Bedienoberfläche zugeordnet ist. Abhängig von der ausgewählten Bedienoberfläche zeigt die Anzeige zugehörige Informationen der ausgewählten Bedienoberfläche an. Der Zugriff auf ein einziges Display für unterschiedliche Bedienoberflächen verringert die Kosten für eine bedienoberflächenspezifische Anzeige.

In einer zweckmäßigen Weiterbildung geben die Bedienelemente Bediensignale über ein Bussystem an ein Steuergerät ab. Der Aufwand für Verkabelung und Buselektronik verringert sich. Denn aufgrund der räumlichen Nähe der Bedienelemente können diese auf dieselbe Buselektronik zurückgreifen, ohne daß Bedienelemente und Buselektronik durch lange Zuleitungen verbunden werden müßten.

In einer vorteilhaften Weiterbildung sind Funktionen einer Klimaanlage einer ersten Bedienoberfläche und Funktionen von Kommunikationsgeräten wie Autoradio, Navigationssystem oder Autotelefon einer zweiten Bedienoberfläche zugeordnet. Die vorgeschlagene funktionale Gliederung erhöht Bedienerfreundlichkeit und Übersichtlichkeit.

In einer Ausgestaltung ist eine Anzeige der ausgewählten Bedienoberfläche zugeordnet. Die räumliche Nähe der Bedienelemente zu der entsprechenden Anzeige, die aufgrund der Integration der Bedienelemente erzielt werden kann, ermöglicht eine einfache Überwachung der betätigten Funktion.

Weitere zweckmäßige Weiterbildungen ergeben sich aus der Beschreibung.

### Zeichnung

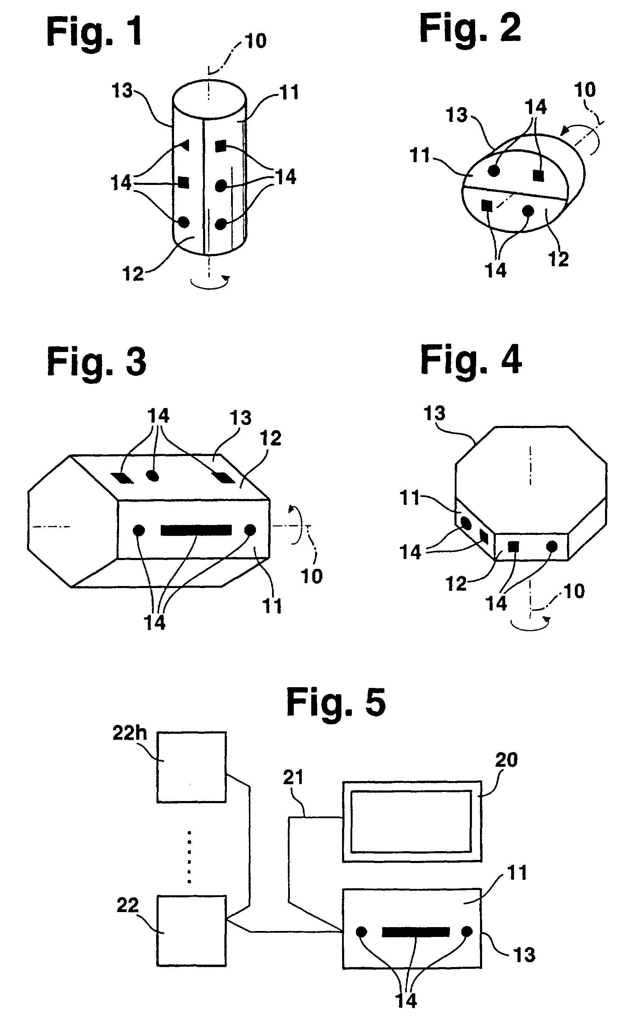

Ausführungsbeispiele sind in der Zeichnung dargestellt und in der nachfolgenden Beschreibung näher erläutert. Es zeigen die Figuren 1 bis 4 mögliche räumliche Ausführungsformen einer Bedienvorrichtung. In Figur 5 findet sich ein Blockschaltbild einer Ausführungsform.

### Beschreibung der Ausführungsbeispiele

Ein Teil 13 läßt sich um eine Achse 10 drehen. Gemäß Figur 1 bilden eine erste Bedienoberfläche 11 und eine zweite Bedienoberfläche 12 den Mantel des als Zylinder ausgeführten Teils 13. Auf den Bedienoberflächen 11, 12 sind Bedienelemente 14 angeordnet. Das Teil 13, wie in Figur 2 abgebildet, ist als Zylinder ausgeführt. Die beiden Bedienoberflächen 11, 12 bilden zwei komplementäre Halbkreise der Deckfläche des Zylinders. In Figur 3 ist das Teil 13 als sechseckiges Prisma ausgeführt. Sechs rechteckförmige Bedienoberflächen 11, 12 begrenzen die Umfangsfläche des Teils 13. Die Länge des Rechtecks entlang der Drehachse übersteigt dessen Breite. Das Ausführungsbeispiel gemäß Figur 4 greift auf das der Figur 3 zurück, jedoch mit dem Unterschied, daß das Rechteck breiter ist als lang. Gemäß Figur 5 ist das Teil 13, das die auf der ersten Bedienoberfläche 11 angeordneten Bedienelemente 14 enthält, über ein Bussystem 21 mit n Steuergeräten 22, 22n verbunden. Über das Bussystem 21 erfolgt der Datenaustausch mit einer Anzeige 20.

Gemäß Figur 1 ist das Teil 13 als Zylinder ausgeführt. Die Mantelfläche des Zylinders läßt sich in beliebig viele Bedienoberflächen 11, 12 unterteilen. Auf jeder Bedienoberfläche 11, 12 sind Bedienelemente 14 angeordnet. Die Bedienoberflächen 11, 12 können unterschiedliche Ausdehnungen annehmen. Die Bedienoberflächen 11, 12 können auch auf dem Walzendeckel des Teils 13 angeordnet sein. Darüberhinaus ist eine Ausführung als Prisma mit beliebiger Grundfläche möglich. Vorzugsweise sind die Flächen der einzelnen Bedienoberflächen 11, 12 kongruent.

Die Unterbringung der Bedienvorrichtung erfolgt im Cockpit eines Kraftfahrzeugs. Das Teil 13 ist um eine Achse 10 drehbar gelagert. Insbesondere im Mittelkonsolenbereich sind die Bedienelemente 14 gut zugänglich. Das das Teil 13 umgebende Cockpit ist genau auf die Größe einer Bedienoberfläche 11, 12 abgestimmt. Damit ist immer nur eine Bedienoberfläche 11, 12 sichtbar und manuell zugänglich. Eine Auswahl der gewünschten Bedienoberfläche 11, 12 erfolgt durch Drehen des Teils 13 um die Achse 10. Diese Drehung kann entweder manuell oder motorisch unterstützt erfolgen. In den jeweiligen Sollstellungen der Bedienoberflächen 11, 12 wird das Teil 13 gerastet fixiert. Stellungsinformationen geben Rückmeldung, ob die gewünschte Sollposition der Bedienoberfläche 11, 12 erreicht ist. Hierzu sind beispielsweise bei einem Verstellantrieb Mittel vorgesehen, die eine inkrementale Positionserfassung zulassen. Näherungssensoren sowie optische und mechanische Sensoren können ebenfalls Stellungsinformationen erfassen.

Für ein Auslösen des Drehvorgangs sind unterschiedliche Konzepte möglich. Zusätzliche, nicht auf dem Teil 13 untergebrachte Bedienelemente geben bei deren Betätigung Informationen an einen Verstellantrieb weiter, das Teil 13 so zu drehen, daß die gewünschte Bedienoberfläche 11, 12 zugänglich wird. Die motorische Walzenbetätigung kann auch durch eine Spracheingabe ausgelöst werden. Eine bestimmte Bedienoberfläche 11, 12 wird als weitere Alternative automatisch in Abhängigkeit von Fahrzustand oder Fahrzeugzustand in Stellung gebracht. Beispielsweise nach Betätigen des Zündschlüssels oder des Türschlosses erscheint automatisch eine Start-Bedienoberfläche 11, 12.

Auf den jeweiligen Bedienoberflächen 11, 12 sind Bedienelemente 14 ähnlicher Funktion zusammengefaßt. Über die erste Bedienoberfläche 11 lassen sich Klimafunktionen ansteuern, wie beispielsweise Lüftung oder Klimaanlage. Die zweite Bedienoberfläche 12 ist auszuwählen, wenn der Betrieb von Kommunikationsgeräten gewünscht ist. Hierzu zählen beispielsweise Autoradio, CD-Spieler, Autotelefon oder Navigationssystem. Wenn bei den vorgenannten Geräten der Funktionsumfang entsprechend groß ist, können die Gerätefunktionen auf weitere Bedienoberflächen verteilt werden. Über eine dritte Bedienoberfläche lassen sich Fensterheber, Schiebedach oder Außenspiegel ansteuern. Die Bedienoberflächen 11, 12 sind lösbar mit dem Teil 13 verbunden. Zwar vorgesehene, jedoch vom Nutzer nicht gewünschte Bedienoberflächen 11, 12 lassen sich durch Blindplatten abdecken. Bedienoberflächen 11, 12 lassen sich nachträglich nachrüsten. Zum Zwecke des Austauschs defekter Bedienkomponenten läßt sich die Blindplatte entfernen, um den Zugang zu erleichtern. Die Beleuchtung der Bedienoberflächen 11, 12 erfolgt zentral über eine oder mehrere Lampen. Die durch die jeweiligen Bedienoberflächen 11, 12 angesteuerten zugehörigen Steuergeräte 22 sind an aus funktionstechnischer Sicht günstigen Stellen angeordnet. Das Klimasteuergerät beispielsweise kann in der Klimaanlage integriert werden, das Radioempfangsteil wird am Fußpunkt der Antenne plaziert, der Verstärker in der Nähe der Lautsprecher, der CD-Wechsler im Kofferraum oder der Empfänger für ein Navigationssystem im Dach. Damit ist die räumliche Trennung von Bedienelementen 14 und Steuergeräten 22 vollzogen.

Unter Bedienelemente 14 fallen sowohl Stell- als auch Anzeigeelemente. Bekannterweise kommen hierbei Taster, Schalter, Drehgeber, Kontaktflächen, Potentiometer, Inkrementalgeber, Quittierungs- oder Funktions-LED zum Einsatz. Zur Signalerfassung und Ansteuerung der Bedienelemente 14 ist ein bidirektionaler Datenaustausch erforderlich. Neben induktiver, kapazitiver oder optischer Übertragung steht die leitungsgebundene im Vordergrund. Hierbei organisiert eine Buselektronik den Datenaustausch der Bedienelemente 14. Die Daten der einzelnen Bedienelemente 14 bereiten spezielle Bauteile für das Bussystem 21 auf. Denkbar ist, daß entweder jede Bedienoberfläche 11, 12 einen eigenen Netzknoten besitzt oder aber ein Netzknoten für alle Bedienoberflächen 11, 12 zuständig ist. Ist das Teil 13 nicht als vollständig durchdrehendes Element gestaltet, kann eine leitungsgebundene Kontaktierung über eine flexible Drahtverbindung erfolgen. Über einen Schleifkontakt können die Bedienoberflächen 11, 12 mit Energie versorgt werden. Daten lassen sich hierbei über eine Modulation der Versorgungsspannung übertragen.

Bei sicherheitsrelevanten Bedienelementen 14 oder Grundfunktionen ist die ständige Zugriffsmöglichkeit sicherzustellen. Für jeden Einzelfall ist abzuwägen, ob solche Bedienelemente in der Bedienvorrichtung integriert werden sollen. Wesentliche Grundfunktionen können auch aus verschiedenen Geräten in einer Haupt- oder Vorzugsbedienoberfläche zusammengefaßt werden.

Nachstehend ist ein möglicher Bedienvorgang erläutert. Der Fahrer wählt über ein Bedienelement, das nicht in dem Teil 13 integriert sein muß, die gewünschte Bedienoberfläche 11, 12 aus. Hierzu sendet das Steuergerät 22, 22n über das Bussystem 21, beispielsweise ein CAN-Bus, einen Befehl an einen Verstellantrieb, der das Teil 13 in die gewünschte Position bringt. Bussysteme 21 besitzen vorzugsweise eine Linien-, Ring- oder Sterntopologie.

Die Position des Teils 13 wird erfaßt und an das Steuergerät 22, 22n zurückgemeldet. Bei Übereinstimmung mit der Sollposition werden die Bedienelemente 14 der ausgewählten Bedienoberfläche 11, 12 freigegeben. Parallel hierzu wird der Anzeige 20, die nicht in dem Teil 13 integriert ist, die aktive Bedienoberfläche 11, 12 mit den zugehörigen Informationen mitgeteilt. Der Benutzer betätigt das gewünschte Funktionsmodul über die Bedienelemente 14. Die Signalzustände der Bedienelemente 14 werden von dem Steuergerät 22, 22n ausgewertet und in entsprechende, das Funktionsmodul ansteuernde Befehle umgesetzt. Die Anzeige 20 gibt den sich abspielenden Vorgang wieder und zeigt die Rückmeldung des angesteuerten Funktionssteuergeräts an.

Entsprechend läßt sich der Bedienvorgang auf n Steuergeräte 22, 22n übertragen, denen jeweils bestimmte Bedienelemente 14 oder Anzeigen 20 zugeordnet sind. Ein Bedienelement 14 kann durchaus eine Befehlsfolge auslösen, die mehrere Steuergeräte 22, 22n über das Bussystem 21 ansteuert. Die Rückmeldung dieser Steuergeräte 22, 22n wird in einer Maske der Anzeige 20 ausgegeben.

Die Anzeige 20 befindet sich in räumlicher Nähe zu dem Teil 13. Jeder Bedienoberfläche 11, 12 ist ein bestimmter Display-Aufbau der Anzeige 20 zugeordnet, der auf die Bedienelemente 14 der ausgewählten Bedienoberflächen 11, 12 genauso abgestimmt ist wie auf die rückgemeldeten Informationen der bedienbaren Steuergeräte 22, 22n.

Neben einem sich ständig mit der ausgewählten Bedienoberfläche 11, 12 aktualisierenden Anzeigenbereich kann ein weiterer vorgesehen werden, der unabhängig von der Bedienvorrichtung ständig wichtige Grundfunktionen ausgibt.

## Patentansprüche

1. Bedienvorrichtung mit auf Bedienoberflächen (11, 12) untergebrachten Bedienelementen (14), wobei ein um eine Achse (10) drehbar gelagertes Teil (13) mindestens zwei Bedienoberflächen (11, 12) aufweist, von denen eine Bedienoberfläche (11, 12) durch Drehen des Teils (13) auswählbar ist, **dadurch gekennzeichnet, dass** ein nicht in besagtem Teil (13) integriertes Anzeigegerät vorgesehen ist und daß jeder Bedienoberfläche jeweils eine Anzeige zugeordnet ist, wobei die Anzeige (20) auf die ausgewählte Bedienoberfläche (11, 12) abgestimmt ist, indem sie Informationen bezüglich der Bedienelemente (14) der ausgewählten Bedienoberfläche (11, 12) und/oder Informationen bezüglich der durch die Bedienelemente (14) der ausgewählten Bedienoberfläche (11, 12) betätigbaren Steuergeräte (22, 22n) anzeigt und die Bedienelemente (14) Bediensignale über ein Bussystem (21) an ein Steuergerät (22, 22n) abgeben.

2. Bedienvorrichtung nach Anspruch 1, **dadurch gekennzeichnet, daß** die Bedienoberflächen (11, 12) Außenflächen des Teils (13) bilden.

3. Bedienvorrichtung nach einem der vorhergehenden Ansprüche, **dadurch gekennzeichnet, daß** die Bedienoberflächen (11, 12) die Umfangsflächen des Teils (13) bilden.

4. Bedienvorrichtung nach Anspruch 1, **dadurch gekennzeichnet, daß** das Teil (13) als Zylinder ausgeführt ist.

5. Bedienvorrichtung nach Anspruch 1, **dadurch gekennzeichnet, daß** das Teil (13) als Prisma ausgeführt ist.

6. Bedienvorrichtung nach einem der vorhergehenden Ansprüche, **dadurch gekennzeichnet, daß** das Teil (13) in einem Cockpit eines Kraftfahrzeugs untergebracht ist.

7. Bedienvorrichtung nach einem der vorhergehenden Ansprüche, **dadurch gekennzeichnet, daß** mittels in einer ersten Bedienoberfläche (11) angeordneten Bedienelementen (14) Funktionen einer Klimaanlage beeinflußbar sind, und daß mittels in zumindest einer weiteren Bedienoberfläche (12) angeordneten Bedienelementen (14) Funktionen von Kommunikationsgeräten wie Autoradio, Navigationssystem oder Autotelefon beeinflußbar sind.

8. Bedienvorrichtung nach einem der vorhergehenden Ansprüche, **dadurch gekennzeichnet, daß** lediglich die ausgewählte Bedienoberfläche (11, 12) sichtbar ist.

9. Bedienvorrichtung nach einem der vorhergehenden Ansprüche, **dadurch gekennzeichnet, daß** nur die Bedienelemente (14) der ausgewählten Bedienoberfläche (11, 12) manuell betätigbar sind.

10. Bedienvorrichtung nach einem der vorhergehenden Ansprüche, **dadurch gekennzeichnet, daß** die Bedienoberflächen (11, 12) lösbar mit dem Teil (13) verbunden sind.

## Claims

1. Control device with controls (14) which are accommodated on control surfaces (11, 12), a part (13) which is mounted so as to be rotatable about an axis (10) having at least two control surfaces (11, 12), one control surface (11, 12) of which can be selected by rotating the part (13), **characterized in that** a display unit which is not integrated in the aforesaid part (13) is provided, and **in that** each control surface is assigned one display in each case, the display (20) being matched to the selected control surface (11, 12) by virtue of the fact that it displays information relating to the controls (14) of the selected control surface (11, 12) and/or information relating to control units (22, 22n) which can be activated by the controls (14) of the selected control surface (11, 12), and **in that** the controls (14) output control signals to a control unit (22, 22n) via a bus system (21).

2. Control device according to Claim 1, **characterized in that** the control surfaces (11, 12) form outer faces of the part (13).

3. Control device according to one of the preceding claims, **characterized in that** the control surfaces (11, 12) form the circumferential faces of the part (13).

4. Control device according to Claim 1, **characterized in that** the part (13) is embodied as a cylinder.

5. Control device according to Claim 1, **characterized in that** the part (13) is embodied as a prism.

6. Control device according to one of the preceding claims, **characterized in that** the part (13) is accommodated in a cockpit of a motor vehicle.

7. Control device according to one of the preceding claims, **characterized in that** functions of an air conditioning system can be influenced by means of controls (14) arranged in a first control surface (11), and **in that** functions of communication devices such as car radio, navigation system or car telephone can be influenced by means of controls (14) which are arranged in at least one further control surface (12).

8. Control device according to one of the preceding claims, **characterized in that** only the selected control surface (11, 12) is visible.

9. Control device according to one of the preceding claims, **characterized in that** only the controls (14) of the selected control surface (11, 12) can be actuated manually.

10. Control device according to one of the preceding claims, **characterized in that** the control surfaces (11, 12) are detachably connected to the part (13).

## Revendications

1. Dispositif de commande comportant des éléments de commande (14) faisant partie de surfaces de commande (11, 12), une pièce (13) montée en rotation autour d'un axe (10) ayant au moins deux surfaces de commande (11, 12) dont on peut sélectionner l'une des surfaces (11, 12) en tournant la pièce (13),
**caractérisé en ce que**
un appareil d'affichage est prévu, non intégré à la pièce (13) et chaque surface de commande est associée chaque fois à un affichage,
les affichages (20) étant accordés suivant la surface de commande (11, 12) sélectionnée **en ce qu'**elle affiche des informations concernant les éléments de commande (14) de la surface de commande (11, 12) sélectionnée et/ou les informations concernant les appareils de commande (22, 22n) actionnés par les éléments de commande (14) de la surface de commande (11, 12) sélectionnée, et les éléments de commande (14) émettent des signaux de commande par un système de bus (21) à destination d'un appareil de commande (22, 22n).

2. Dispositif de commande selon la revendication 1,
**caractérisé en ce que**
les surfaces de commande (11, 12) constituent les surfaces extérieures de la pièce (13).

3. Dispositif de commande selon l'une des revendications précédentes,
**caractérisé en ce que**
les surfaces de commande (11, 12) constituent la surface périphérique de la pièce (13).

4. Dispositif de commande selon la revendication 1,
**caractérisé en ce que**
la pièce (13) est un cylindre.

5. Dispositif de commande selon la revendication 1,
**caractérisé en ce que**
la pièce (13) est un prisme.

6. Dispositif de commande selon l'une des revendications précédentes,
**caractérisé en ce que**
la pièce (13) est logée dans l'habitacle d'un véhicule.

7. Dispositif de commande selon l'une des revendications précédentes,
**caractérisé en ce qu'**
à l'aide d'éléments de commande (14) installés dans une première surface de commande (11), on peut influencer les fonctions d'une installation de climatisation, et
à l'aide d'éléments de commande (14) installés dans au moins une autre surface de commande (12), on peut influencer les fonctions d'appareils de communication tels qu'un autoradio, un système de navigation ou un téléphone de voiture.

8. Dispositif de commande selon l'une des revendications précédentes,
**caractérisé en ce qu'**
uniquement la surface de commande (11, 12) sélectionnée est visible.

9. Dispositif de commande selon l'une des revendications précédentes,
**caractérisé en ce que**
seulement les éléments de commande (14) de la surface de commande (11, 12) sélectionnée ne peuvent être actionnés manuellement.

10. Dispositif de commande selon l'une des revendications précédentes,
**caractérisé en ce que**
les surfaces de commande (11, 12) sont reliées de manière amovible à la pièce (13).
